# EUROPEAN PATENT APPLICATION

(11) **EP 4 380 306 A1**
(43) Date of publication of application: **05.06.2024**
(21) Application number: 21951946.9
(22) Date of filing: 30.07.2021
(51) Int. Cl.: H04W 92/20, H04W 48/02

(54) **WIRELESS BASE STATION AND WIRELESS COMMUNICATION SYSTEM**

(71) Applicant: NTT DOCOMO, INC., Tokyo 100-6150 (JP)
(72) Inventor: MIN Tianyang, Tokyo 100-6150 (JP)
(74) Representative: Hoffmann Eitle
(86) International application number: PCT/JP2021/028512
(87) International publication number: WO 2023/007750

(57) **Abstract**

A radio base station transmits to a different radio base station that is a transition destination of a terminal, a message inquiring about a restriction status of the terminal at the different radio base station, and receives terminal support information indicating a support status of a type of the terminal based on the number of receiving antennas of the terminal, from the different radio base station. The radio base station controls a transition of the terminal to a cell formed by the different radio base station, based on the terminal support information that is received.

## Description

### TECHNICAL FIELD

The present disclosure relates to a radio base station and a radio communication system that perform radio communication with a terminal with reduced capability.

### BACKGROUND ART

The 3rd Generation Partnership Project (3GPP) has prepared a specification for the 5th generation mobile communication system (which may be called 5G, New Radio (NR) or Next Generation (NG)), and is also in the process of specifying the next generation called Beyond 5G, 5G Evolution or 6G.

In 3GPP Release-17, support for reduced capability terminals (User Equipment, UE) has been considered (NON-PATENT LITERATURE 1). Such UE is also referred to as reduced UE capability (RedCap UE), and can be suitably used for industrial wireless sensors, video surveillance, wearable terminals, or the like.

A RedCap UE may have a different number of receiving antennas (which may be referred to as RX branch) to be mounted. Specifically, there is a RedCap UE having one receiving antenna (1 RX branch) and a RedCap UE having two receiving antennas (2 RX branch).

In light of the above circumstances, the restriction (barring) of RedCap UE according to the number of receiving antennas has been studied (NON-PATENT LITERATURE 2) .

### CITATION LIST

### NON-PATENT LITERATURE

Non-Patent Literature 1: "Revised WID on support of reduced capability NR devices", RP-210918, 3GPP TSG RAN Meeting #91e, 3GPP, March 2021
Non-Patent Literature 2: "Report of 3GPP TSG RAN WG2 meeting #114-e, Online", 3GPP TSG RAN WG2 meeting #114-e, 3GPP, May 2021

### SUMMARY OF THE INVENTION

However, the restriction of RedCap UE according to the number of receiving antennas has the following problems. First, a radio base station (may be read as meaning gNB, cell, node, or the like) which is a handover destination of the UE (transition) does not support RedCap UE in some cases.

In addition, the restriction of RedCap UE according to the number of receiving antennas, specifically whether the 1 RX branch and/or the 2 RX branch are to be restricted, may change dynamically according to the load of a radio base station which is a handover destination (target radio base station).

However, a radio base station which is a handover source (source radio base station) cannot recognize the restriction status of RedCap UE at the target radio base station.

Accordingly, the following disclosure has been made in view of the above circumstances, and an object of the present invention to provide a radio base station and a radio communication system capable of realizing an appropriate transition of a terminal such as a RedCap UE, based on a restriction status of RedCap UE according to the number of receiving antennas.

An aspect of the present disclosure is a radio base station (gNB 100) including: a transmission unit (Xn processing unit 120) that transmits to a different radio base station that is a transition destination of a terminal, a message inquiring about a restriction status of the terminal at the different radio base station; a reception unit (Xn processing unit 120) that receives terminal support information indicating a support status of a type of the terminal based on the number of receiving antennas of the terminal, from the different radio base station; and a control unit (control unit 140) that controls a transition of the terminal to a cell formed by the different radio base station, based on the terminal support information that is received.

An aspect of the present disclosure is a radio base station (gNB 100) including: a transmission unit (Xn processing unit 120) that transmits to a different radio base station that is a transition destination of a terminal, a message inquiring about a resource status of the different radio base station; a reception unit (Xn processing unit 120) that receives load condition information indicating a usage status of each terminal type based on the number of receiving antennas of the terminal; and a control unit (control unit 140) that controls a transition of the terminal to a cell formed by the different radio base station, based on the load condition information that is received.

An aspect of the present disclosure is a radio communication system (radio communication system 10) including a first radio base station and a second radio base station, in which the first radio base station includes: a transmission unit that transmits to the second radio base station that is a transition destination of a terminal, a message inquiring about a restriction status of the terminal at the second radio base station; and a control unit that controls a transition of the terminal to a cell formed by the second radio base station, based on terminal support information indicating a support status of a type of the terminal that is based on the number of receiving antennas of the terminal, and the second radio base station includes a transmission unit that transmits the terminal support information to the first radio base station in response to the message inquiring about the restriction status.

An aspect of the present disclosure is a radio communication system (radio communication system 10) including a first radio base station and a second radio base station, in which the first radio base station includes: a transmission unit that transmits to the second radio base station that is a transition destination of a terminal, a message inquiring about a resource status of the second radio base station; and a control unit that controls a transition of the terminal to a cell formed by the second radio base station, based on load condition information indicating a usage status of each terminal type that is based on the number of receiving antennas of the terminal, and the second radio base station includes a transmission unit that transmits the load condition information.

### BRIEF DESCRIPTION OF THE DRAWINGS

[FIG. 1] FIG. 1 is an overall schematic diagram of a radio communication system 10.
[FIG. 2] FIG. 2 is a functional block diagram of a gNB 100.
[FIG. 3] FIG. 3 is a functional block diagram of UE 200.
[FIG. 4] FIG. 4 is a diagram illustrating a communication sequence example (part 1) related to the sharing of a restriction status of RedCap UE between RAN nodes according to operation example 1.
[FIG. 5] FIG. 5 is a diagram illustrating a communication sequence example (part 2) related to the sharing of the restriction status of RedCap UE between the RAN nodes according to the operation example 1.
[FIG. 6] FIG. 6 is a diagram illustrating a communication sequence example (part 3) related to the sharing of the restriction status of RedCap UE between the RAN nodes according to the operation example 1.
[FIG. 7] FIG. 7 is a diagram illustrating a communication sequence example (part 1) related to the sharing of a restriction status of RedCap UE between a CU and a DU according to operation example 2.
[FIG. 8] FIG. 8 is a diagram illustrating a communication sequence example (part 2) related to the sharing of the restriction status of RedCap UE between the CU and the DU according to the operation example 2.
[FIG. 9] FIG. 9 is a diagram illustrating a communication sequence example (part 3) related to the sharing of the restriction status of RedCap UE between the CU and the DU according to the operation example 2.
[FIG. 10] FIG. 10 is a diagram illustrating an example of a hardware configuration of the gNB 100 and UE 200.

### DESCRIPTION OF EMBODIMENTS

Embodiments will be described below with reference to the drawings. Note that the same or similar reference numerals have been attached to the same functions and configurations, and the descriptions thereof will be omitted as appropriate.

### (1) Overall schematic configuration of radio communication system

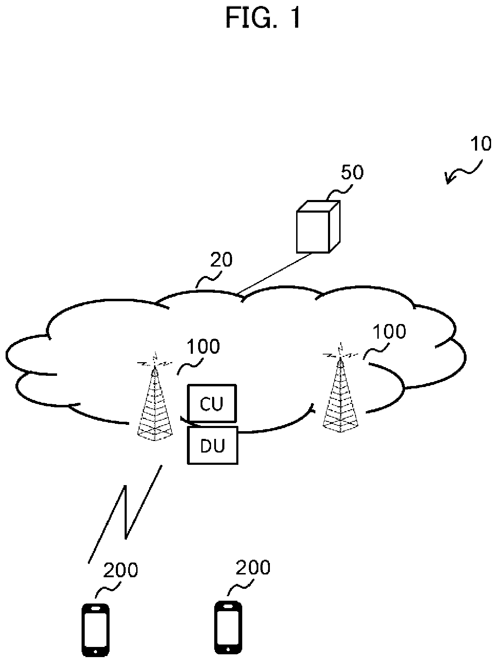

FIG. 1 is an overall schematic diagram of a radio communication system 10 according to an embodiment. The radio communication system 10 is a radio communication system according to 5G New Radio (NR), and includes a Next Generation-Radio Access Network 20 (hereinafter, NG-RAN 20) and terminals 200 (user equipment 200, hereinafter, UE(s) 200) .

The radio communication system 10 may be a radio communication system according to a scheme called Beyond 5G, 5G Evolution, or 6G.

The NG-RAN 20 includes radio base stations 100 (gNBs 100) . The specific configuration of the radio communication system 10 including the number of gNBs and UEs is not limited to the example illustrated in FIG. 1.

The NG-RAN 20 actually includes a plurality of NG-RAN nodes, specifically gNBs (or ng-eNBs), and is connected to a core network (5GC, not illustrated) according to 5G. The NG-RAN 20 is connected to an access and mobility management function 50 (AMF 50), which is included in a 5G system architecture and provides an access and mobility management function for the UE 200. The NG-RAN 20 and the 5GC may be referred to simply as a network.

The gNB 100 is a radio base station according to NR, and performs radio communication with the UE 200 according to NR. Note that the gNB 100 may be configured of a CU (central unit) and a DU (distributed unit), and the DU may be separated from the CU and installed in a geographically different position.

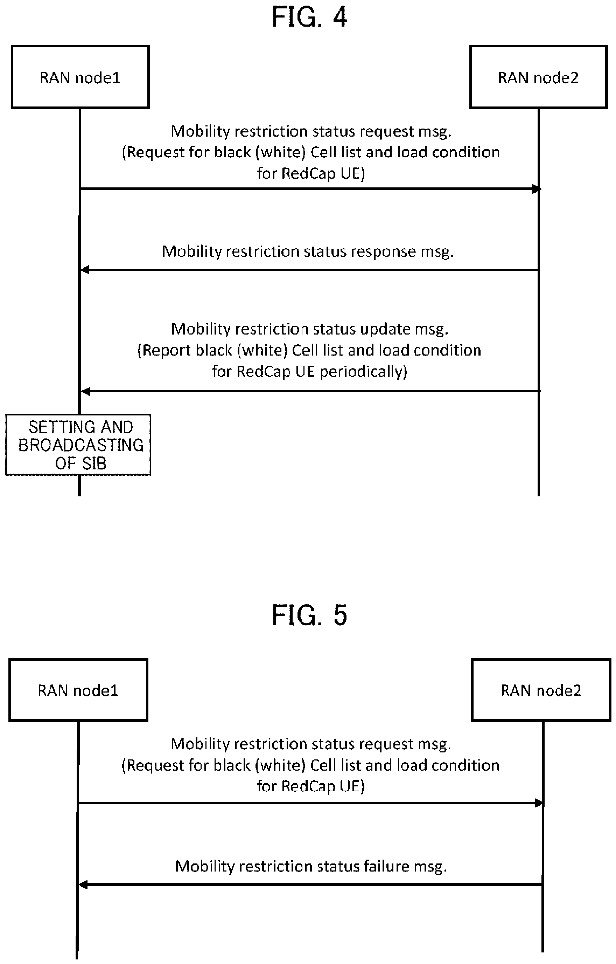

By controlling radio signals transmitted from a plurality of antenna elements, the gNB 100 and UE 200 can support Massive MIMO which generates a more directional beam BM (not illustrated in FIG. 1, see FIG. 4), carrier aggregation (CA) which is used by bundling a plurality of component carriers (CCs), dual connectivity (DC) which simultaneously performs communication between the UE and each of NG-RAN nodes, or the like.

In the present embodiment, the moving range of the UE 200 may be limited to a specific area. Specifically, the moving range of the UE 200 may be limited within a specific cell or cells formed by the gNB 100. Alternatively, the UE 200 may move little, and the moving range thereof may be limited within approximately the same cell.

The UE whose moving range is limited as above may be determined to be in a low mobility status. The UE which moves little and whose moving range is limited within approximately the same cell may be determined to be in a stationary status. The stationary status may be included in the low mobility status as one aspect of the low mobility status. Alternatively, the low mobility status may be included in the stationary status as one aspect of the stationary status. Further, "low mobility" and "stationary" may be expressed in other synonymous terms, such as motionless, parked, immobilized, stopped, halted, unmoving, and static (in the following, the term "low mobility" is used in consistent).

When the moving range of the UE 200 is limited, the capability of the UE 200 may be reduced. The capability to be reduced is not particularly limited, but the capability (operation) regarding measurements for radio resource management (RRM) can be reduced (or can be limited or the like).

The UE as above may be referred to as a RedCap UE (reduced UE capability) or the like. A RedCap UE may be interpreted as a category of UE used, for example, for industrial wireless sensors, video surveillance, wearable terminals, or the like.

Alternatively, a RedCap UE may not necessarily have reduced capabilities and may be interpreted as UE for URLLC (ultra-reliable and low latency communications), or an Internet of Things (IoT). A RedCap UE may be referred to as a specific type of UE.

Meanwhile, a Non-RedCap UE may be interpreted as UE having normal capabilities, or UE for enhanced Mobile Broadband (eMBB).

A RedCap UE may have a different number of receiving antennas (which may be referred to as RX branch) to be mounted. Specifically, there may be a RedCap UE having one receiving antenna (1 RX branch) and a RedCap UE having two receiving antennas (2 RX branch). However, the number of receiving antennas may not necessarily be limited to 1 RX branch and 2 RX branch.

### (2)Functional block configuration of radio communication system

Next, a functional block configuration of the radio communication system 10 will be described. Specifically, the functional block configuration of the gNB 100 and the UE 200 will be described.

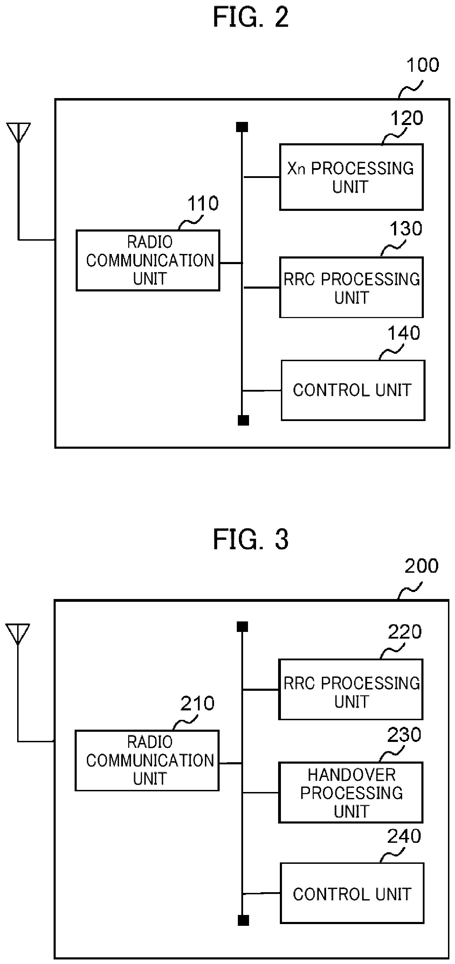

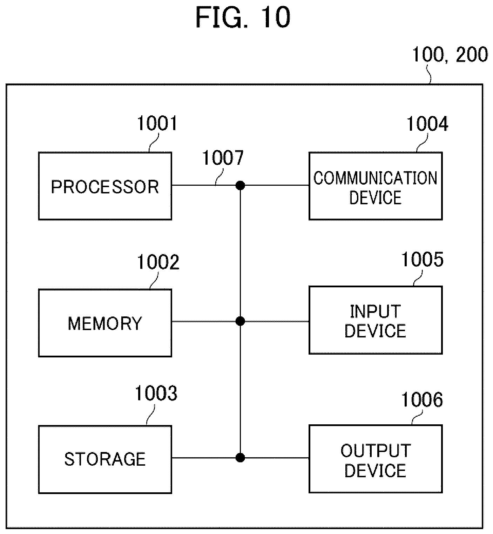

FIG. 2 is a functional block diagram of the gNB 100. FIG. 3 is a functional block diagram of the UE 200. Note that only the main functional blocks related to the description of the embodiment are illustrated in FIGS. 2 and 3, and the gNB 100 and the UE 200 have other functional blocks (for example, a power supply unit). FIGS. 2 and 3 illustrate the functional block configurations of the gNB 100 and the UE 200, and please refer to FIG. 10 for the hardware configuration.

### (2.1) gNB 100

As illustrated in FIG. 2, the gNB 100 includes a radio communication unit 110, an Xn processing unit 120, an RRC processing unit 130, and a control unit 140.

The radio communication unit 110 transmits a downlink signal (DL signal) according to NR. The radio communication unit 110 receives an uplink signal (UL signal) according to NR.

The Xn processing unit 120 performs processing of a message via the Xn interface, which is a kind of interface between RAN (radio access network) nodes. Specifically, the Xn processing unit 120 can transmit and receive a message according to XnAP (application protocol). More specifically, the Xn processing unit 120 can transmit and receive various messages according to XnAP specified in 3GPP TS38.423.

When the gNB 100 adopts a CU-DU configuration, the Xn processing unit 120 can transmit and receive various messages according to F1AP specified in 3GPP TS38.473 between the CU and the DU.

The Xn processing unit 120 may transmit a message inquiring about the restriction status of the UE 200 at a different radio base station or the load condition of the UE 200 at the different radio base station, to the different radio base station (which may be called a target radio base station) that is a transition destination of the UE 200 (may be read as meaning a handover destination or re-selection destination). In the present embodiment, the Xn processing unit 120 may constitute a transmission unit.

Specifically, the Xn processing unit 120 may transmit Mobility restriction status request msg. (tentative name) to the target radio base station (or target DU). The restriction status of the UE 200 may be, for example, the presence or absence of the restriction of RedCap UE at the target radio base station, or the presence or absence of the restriction of at least any one of RedCap UEs including 1 RX branch and 2 RX branch. Alternatively, the restriction status of the UE 200 is not necessarily limited to RedCap UEs, and may be, for example, the presence or absence of the restriction of a specific type of UE with reduced some capability (the same shall apply hereinafter).

The Xn processing unit 120 may also transmit a message inquiring about a resource status of a different radio base station, to the different radio base station (target radio base station) that is a transition destination of the UE 200.

Specifically, the Xn processing unit 120 may transmit Resource status request msg. (tentative name) to the target radio base station (or target DU).

The Xn processing unit 120 may receive terminal support information indicating the support status of the terminal (UE) type based on the number of receiving antennas of the UE 200, from a different radio base station. In the present embodiment, the Xn processing unit 120 may constitute a reception unit.

Specifically, the Xn processing unit 120 may receive information from the target radio base station about cells in which a RedCap UE of the 1 RX branch and/or 2 RX branch is restricted (or unrestricted). The cells may refer to cells formed by the target radio base station. The cells may also be serving cells or non-serving cells.

More specifically, the terminal support information may be included in Mobility restriction status update msg., which is transmitted from the target radio base station in response to Mobility restriction status request msg. That is, the terminal support information may be transmitted, in response to an inquiry about the restriction status of the UE 200 from the radio base station which is a handover source (source radio base station).

Alternatively, the terminal support information may be included in Mobility restriction status response msg. that is transmitted from the target radio base station. The terminal support information may also be provided as a list of cells for which a RedCap UE is restricted (or is unrestricted) (alternatively, a list of frequencies may be used, and the cell list may be read as meaning a frequency (frequency band) list; the same shall apply hereinafter). The list of cells for which a RedCap UE is restricted may be referred to as a black cell list, and the list of cells for which a RedCap UE is unrestricted may be referred to as a white cell list.

In addition, the Xn processing unit 120 may receive load condition information for a RedCap UE indicating the usage status of each terminal (UE) type based on the number of receiving antennas of the UE 200, from a different radio base station.

Specifically, the Xn processing unit 120 may receive from the target radio base station, information that capable of recognizing the load caused by a RedCap UE in a cell formed by the target radio base station.

The load condition information may be the number of active UEs (which may not be limited to RedCap UEs) in a cell and/or the number of active UEs being in the connection status (RRC_CONNECTED) in the radio resource control layer. Alternatively, the load condition information may be the capacity for active UEs and/or RRC_CONNECTED UEs (which may be interpreted as the amount of radio resources, for example). In addition, the load condition information may also indicate the number of RedCap UEs described above for each network slice (S-NSSAI: Single-Network Slice Selection Assistance Information).

The load condition information may also be provided when the Xn processing unit 120 transmits Resource status request msg. (tentative name) to the target radio base station and receives Resource status response msg. (or Resource status update msg., tentative name) from the target radio base station.

The RRC processing unit 130 performs various processing in the radio resource control layer (RRC). Specifically, the RRC processing unit 130 can transmit an RRC Reconfiguration to the UE 200. In addition, the RRC processing unit 130 can receive an RRC Reconfiguration Complete, which is a response to the RRC Reconfiguration, from the UE 200.

The RRC processing unit 130 may transmit system information including terminal support information to the UE 200. In the present embodiment, the RRC processing unit 130 may constitute a transmission unit for transmitting the system information including the terminal support information to the UE 200.

The system information may be broadcasted to the UE 200 by a SIB (System Information Block), although it is not particularly limited.

The control unit 140 controls each functional block constituting the gNB 100. In particular, in the present embodiment, the control unit 140 controls the transition (handover) of RedCap UE to another cell.

Specifically, the control unit 140 may control the transition of the UE 200 to a cell formed by a different radio base station, based on terminal support information (for example, a list of cells where a RedCap UE is restricted (or unrestricted)) received from the different radio base station (target radio base station).

More specifically, the control unit 140 may avoid a handover to the cell when a RedCap UE (which may be based on the number of receiving antennas) is restrictedand the UE 200 corresponds to the RedCap UE.

Meanwhile, when a RedCap UE (which may be based on the number of receiving antennas) is unrestricted and the UE 200 corresponds to the RedCap UE, the control unit 140 may perform a handover to the cell.

The control unit 140 may control a transition of a terminal to the cell formed by a different radio base station, based on the load condition information (for example, the number of active UEs in the cell) that is received from the different radio base station (target radio base station).

Specifically, the control unit 140 may avoid a handover to the cell when the number of active UEs in the cell is equal to or greater than a predetermined number and the UE 200 corresponds to the RedCap UE.

Meanwhile, the control unit 140 may perform a handover to the cell when the number of active UEs in the cell is less than a predetermined number and the UE 200 corresponds to the RedCap UE.

Although the case has been described above in which the gNB 100 is a handover source (source radio base station), the gNB 100 can operate as a target radio base station as a matter of course.

### (2.2) UE 200

As illustrated in FIG. 3, the UE 200 includes a radio communication unit 210, an RRC processing unit 220, a handover processing unit 230, and a control unit 240. Here, the UE 200 may be a RedCap UE.

The radio communication unit 210 transmits an uplink signal (UL signal) according to NR. The radio communication unit 210 receives a downlink signal (DL signal) according to NR.

The RRC processing unit 220 performs various processing in the radio resource control layer (RRC). Specifically, the RRC processing unit 220 can transmit and receive messages for the radio resource control layer.

Specifically, the RRC processing unit 220 can receive an RRC Reconfiguration from the network, more specifically, from the NG-RAN 20. In addition, the RRC processing unit 220 can transmit an RRC Reconfiguration Complete, which is a response to the RRC Reconfiguration, to the network.

Further, the RRC processing unit 220 may receive system information transmitted from the gNB 100. Specifically, the RRC processing unit 220 may receive an MIB (Master Information Block) and a SIB. In particular, in the present embodiment, the RRC processing unit 220 may receive system information (SIB) including terminal support information. The terminal support information may include a list of cells in which RedCap UE is restricted (or is unrestricted), as described above.

The handover processing unit 230 performs processing related to handover of the UE 200. Specifically, the handover processing unit 230 can perform handover processing when the UE 200 is a RedCap UE.

The handover processing unit 230 may measure the reception quality (such as reference signal received power (RSRP)) of serving cells and neighboring cells (which may be called peripheral cells), and perform a handover to the cell satisfying the conditions such as reception quality.

The serving cell may simply be interpreted as a cell to which the UE 200 is connected, but more specifically, in the UE with RRC_CONNECTED for which carrier aggregation (CA) is not configured, a primary cell is constituted by only one serving cell. In the UE with RRC_CONNECTED that is configured using CA, the serving cell may be interpreted indicating a set of one or more cells including a primary cell and all secondary cells.

The handover processing unit 230 may also determine a cell which is a handover destination of the UE 200 (may be called a target radio base station or a target cell), and/or a cell which is a measurement target for reception quality, based on the terminal support information.

The control unit 240 controls each functional block that constitutes the UE 200. In particular, in the present embodiment, the control unit 240 may perform various controls when the UE 200 is a RedCap UE.

Specifically, the control unit 240 may perform control according to the number of receiving antennas (1 RX branch/2 RX branch) of the UE 200. That is, in the radio communication system 10, at least one of the cells where handover can be performed and radio resource management such as measurement of reception quality and measurement report may be different according to the number of receiving antennas of the UE 200.

### (3) Operation of radio communication system

Next, an operation of the radio communication system 10 will be described. Specifically, a description will be given regarding the operation related to a handover between the gNBs 100 (RAN nodes) when the UE 200 is a RedCap UE.

### (3.1) Assumption and problem

As described above, a RedCap UE may have a different number of receiving antennas (RX branch) to be mounted. In the present embodiment, the RedCap UE having one receiving antenna (1 RX branch) and the RedCap UE having two receiving antennas (2 RX branch) are assumed. However, the number of receiving antennas is not limited thereto.

When the number of RX branch mounted in this manner is different, the capability (performance) of the UE may also be different. For this reason, when a cell is crowded, it is assumed that the RedCap UE of 2 RX branch with high-performance is permitted and the RedCap UE of 1 RX branch is restricted (barring).

For example, a SIB (which does not have to be a MIB) may separately broadcast the UE 200 of the cells that prohibit the access (connection) of RedCap UE of 1 RX branch and the cells that prohibit the access of RedCap UE of 2 RX branch.

Meanwhile, there may be the following problems regarding handover of RedCap UE. Specifically, when a RedCap UE is handed over from the source radio base station (source cell) to the target radio base station (target cell), in a case where the target radio base station does not support RedCap UE, the handover may result in a handover preparation failure.

In addition, when the access of RedCap UE is restricted according to the number of RX branch as described above, since the presence or absence of the restriction is related to the load condition of the target cell (e.g., the number of UEs which are connected), the restriction status may be dynamic information.

However, the support information or the restriction status of the dynamic RedCap UE cannot be appropriately shared between the source radio base station and the target radio base station.

An operation example which can solve such problems will be described below.

### (3.2) Operation example

### (3.2.1) Operation example 1

In this operation example, an operation will be described in which the source radio base station shares the support information or restriction status of RedCap UE at the target radio base station. In the following description, the source radio base station will be appropriately denoted as RAN node 1, and the target radio base station as RAN node 2.

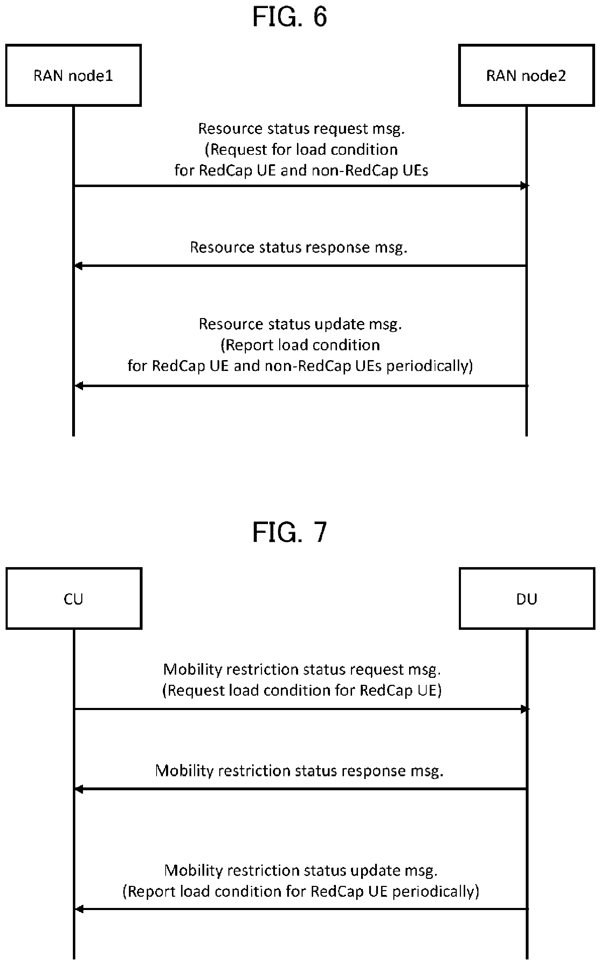

FIG. 4 is a diagram illustrating a communication sequence example (part 1) related to the sharing of a restriction status of RedCap UE between RAN nodes according to operation example 1. FIG. 5 is a diagram illustrating a communication sequence example (part 2) related to the sharing of a restriction status of RedCap UE between the RAN nodes according to the operation example 1. FIG. 6 illustrates a communication sequence example (part 3) related to the sharing of a restriction status of RedCap UE between the RAN nodes according to the operation example 1.

As illustrated in FIG. 4, RAN node 1 may transmit Mobility restriction status request msg. to RAN node 2. Mobility restriction status request msg. is a tentative name and may be referred to by another name. Mobility restriction status request msg. is a message that queries a restriction status (which may be the terminal support information; the same shall apply hereinafter) or load condition of RedCap UE in RAN node 2 (target cell).

Mobility restriction status request msg. may include the following information elements (IE):
- Request for a cell list where a RedCap UE is restricted (or unrestricted) in RAN node 2 (a cell list may also be used in which a RedCap UE of 1 RX branch and/or 2 RX branch is restricted (or unrestricted))

The cell list may be configured based on a handover within the same frequency band (intra freq), between different frequency bands (inter freq) and/or between different RATs (inter RAT). The cell list may also be a frequency list as described above.

- Request for a cell list in which a RedCap UE is supported (or not supported) in RAN node 2 (a cell list may also be used in which a RedCap UE of 1 RX branch and/or 2 RX branch is supported (or not supported))

As described above, a list of cells for which a RedCap UE is restricted may be referred to as a black cell list, and a list of cells for which a RedCap UE is unrestricted may be referred to as a white cell list.

- Request for information (load condition information) indicating the load condition for a RedCap UE in RAN node 2 (target cell)

The load condition information may be indicated by, for example, Number Of active (RedCap) UEs, Number of UEs in RRC connected mode, available capacity for active UEs, available RRC connection capacity, or the like.

The number of UEs may be the number of RedCap UEs (1 RX branch and/or 2 RX branch), or the number of RedCap UEs and Non-RedCap UEs. Alternatively, the load condition information may be the number of RedCap UEs and Non-RedCap UEs for each network slice (S-NSSAI). The number of active RedCap UEs may be interpreted as the number of RedCap UEs having downlink (DL) or uplink (UL) transmission data of data radio bearer (DRB) (the same applies to the number of active Non-RedCap UEs).

The load condition information may be requested by Resource status request msg. (see FIG. 6).

### • Report periodicity

A periodicity of the restriction status, terminal support information and/or load condition information of RedCap UE reported from RAN node 2 to RAN node 1 may be specified.

As illustrated in FIGS. 4 and 6, RAN node 2 may respond to the above request by means of Mobility restriction status response msg. (tentative name) or Mobility restriction status update msg. (tentative name), or Resource status response msg. (tentative name) or Resource status update msg. (tentative name). Also, as illustrated in FIG. 5, RAN node 2 may return Mobility restriction status failure msg. to RAN node 1 if RAN node 2 cannot provide appropriate information for the above request.

Mobility restriction status response msg., or Mobility restriction status update msg. may include the following information elements (IE):
· A cell list where a RedCap UE is restricted (or unrestricted) in RAN node 2 (a cell list may also be used in which a RedCap UE of 1 RX branch and/or 2 RX branch is restricted (or unrestricted))

The cell list may be configured based on a handover within the same frequency band (intra freq), between different frequency bands (inter freq) and/or between different RATs (inter RAT).

Alternatively, RAN node 2 may inform RAN node 1 of the restriction status or terminal support information of RedCap UE (1 RX branch and/or 2 RX branch), in a predetermined cell list transmitted from RAN node 1. The report periodicity may follow the one described above.

- Load condition information of RedCap UE (1 RX branch and/or 2 RX branch) and Non-RedCap UE for each (predetermined) cell formed by RAN node 2

As described above, the load condition information may be the number of RedCap UEs and Non-RedCap UEs for each network slice (S-NSSAI). The report periodicity may follow the one described above. The load condition information may be reported by Resource status update msg. (see FIG. 6).

RAN node 1 (source radio base station) may configure system information (SIB) to be broadcasted to UE 200, based on the cell list (black cell list or white cell list) and terminal support information (or restriction status) of RedCap UE (1 RX branch and/or 2 RX branch), reported by RAN node 2.

For example, RAN node 1 may broadcast a list of cells to be applied for handover within the same frequency band (intra freq), between different frequency bands (inter freq), and/or between different RATs (inter RAT) (see FIG. 4).

RAN node 1 may configure a cell list (black cell list or white cell list) reported from RAN node 2 as a measurement object (measObject (NR)). Alternatively, RAN node 1 may remove the cell list of RedCap UE from candidateCellInfoList included in RRM config of HandoverPreparationInformation msg.. In addition, RAN node 1 may not transmit a handover request to the cells included in the black cell list.

In this operation example, the source radio base station and the target radio base station may be applied to the sharing of support information or restriction status of RedCap UE between a master node (which may be a primary cell) and a secondary node (which may be a secondary cell).

Even if Mobility restriction status request msg. is not transmitted from RAN node 1 to RAN node 2, RAN node 2 may autonomously transmit Mobility restriction status response msg. (or Mobility restriction status update msg.), that is, the support information or restriction status of RedCap UE. RAN node 2 may transmit the message to multiple RAN nodes simultaneously.

Alternatively, RAN node 1 may transmit terminal support information (or restriction status) of RedCap UE (1 RX branch and/or 2 RX branch) included in Mobility restriction status response msg., to the AMF 50 (see FIG. 1) . The AMF 50 may transmit support information or restriction status of RedCap UE in RAN node 1, to the RAN node included in the AMF 50.

### (3.2.2) Operation example 2

In this operation example, an operation will be described in which the support information or restriction status of RedCap UE is shared when the gNB 100 adopts a CU-DU configuration. When the gNB 100 adopts the CU-DU configuration, specifically, a higher layer split (HLS) configuration, the message described in the operation example 1 may be transmitted from the CU to the DU.

The HLS may be interpreted as a configuration in which only a radio resource control layer (RRC) and a packet data convergence protocol layer (PDCP) are provided in the CU, and the radio link control layer (RLC) and other lower layers are provided in the DU.

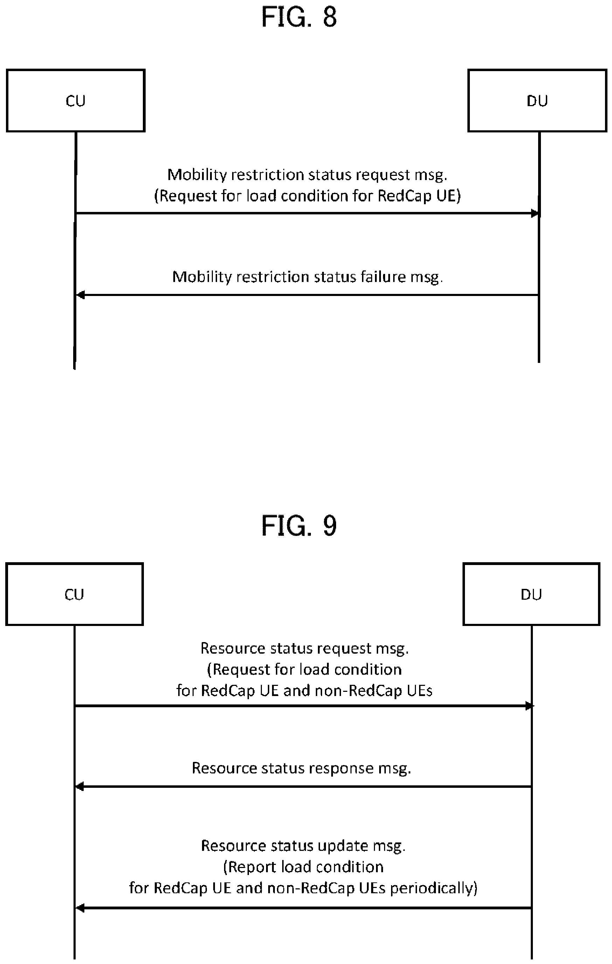

FIG. 7 is a diagram illustrating a communication sequence example (part 1) related to the sharing of a restriction status of RedCap UE between a CU and a DU according to the operation example 2. FIG. 8 illustrates a communication sequence example (part 2) related to the sharing of a restriction status of RedCap UE between the CU and the DU according to the operation example 2. FIG. 9 illustrates a communication sequence example (part 3) related to the sharing of a restriction status of RedCap UE between the CU and the DU according to the operation example 2.

Since FIGS. 7 to 9 correspond to FIGS. 4 to 6 respectively, and have the same message as that of FIGS. 4 to 6, the specific explanation will be omitted. As illustrated in FIGS. 7 to 9, the restriction status (terminal support information) of RedCap UE may be shared between the CU and DU.

### (4) Operation/effect

According to the above-described embodiment, the following operation and effect can be obtained. Specifically, the gNB 100 (source radio base station) can transmit Mobility restriction status request msg. to the target radio base station, and receive from the target radio base station, Mobility restriction status response msg. (or Mobility restriction status update msg.) including terminal support information indicating the support status of the terminal (UE) type based on the number of RX branch of the UE 200.

The gNB 100 transmits Resource status request msg. to the target radio base station, and receives from the target radio base station, Resource status response msg. (or Resource status update msg.) including load condition information for RedCap UE indicating the usage status of each terminal (UE) type based on the number of RX branch of the UE 200.

For this reason, even when there are multiple types of RedCap UEs with different numbers of RX branch, an appropriate transition of the UE 200 can be realized based on the restriction status of RedCap UE according to the number of RX branch.

In particular, according to the above-described operation example, when a RedCap UE is handed over, the source radio base station can recognize the support status (restriction status) and load condition of the RedCap UE at the target radio base station by exchanging information between the RAN nodes in advance, thereby reducing a handover failure, achieving load balancing between the RAN nodes, and the like.

In addition, in the present embodiment, the source radio base station can broadcast the UE 200 of system information (SIB) including the support status (terminal support information) of RedCap UE. For this reason, the gNB 100 and the UE 200 (RedCap UE) can appropriately select a candidate cell that is a handover destination.

### (5) Other Embodiments

Although the embodiment has been described as above, the present invention is not limited to the description of the embodiment, and it is obvious to those skilled in the art that various modifications and improvements are possible.

For example, in the embodiment described above, the RedCap UE is described on the assumption that some capability is reduced; however, as described above, the RedCap UE may not necessarily be reduced in capability and may be interpreted as UE for URLLC (Ultra-Reliable and Low Latency Communications), or an Internet of Things (IoT), and may be a specific type of UE that is distinguishable from Non-RedCap UE.

In the description described above, configure, activate, update, indicate, enable, specify, and select may be interchangeably interpreted. Similarly, link, associate, correspond, and map may be interchangeably interpreted, and allocate, assign, monitor, and map may also be interchangeably interpreted.

In addition, specific, dedicated, UE-specific, and UE-dedicated may be interchangeably interpreted. Similarly, common, shared, group-common, UE-common, and UE-shared may be interchangeably interpreted.

In the present disclosure, terms such as "precoding", "precoder", "weight (precoding weight)", "quasi-Co-Location (QCL)", "transmission configuration indication status (TCI status)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

The block diagram (FIGS. 2 and 3) used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

Further, the above-described gNB 100 and UE 200 (the device) may function as a computer that performs processing of a radio communication method of the present disclosure. FIG. 10 is a diagram illustrating an example of a hardware configuration of the device. As illustrated in FIG. 10, the device may be configured as a computer device including a processor 1001, a memory 1002, a storage 1003, a communication device 1004, an input device 1005, an output device 1006, a bus 1007, and the like.

Furthermore, in the following description, the term "device" can be read meaning as circuit, device, unit, or the like. The hardware configuration of the device may include one or more devices illustrated in the figure or may not include some of the devices.

Each of the functional blocks of the device (FIGS. 2 and 3) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above can be executed by one processor 1001 or can be executed simultaneously or sequentially by two or more processors 1001. The processor 1001 can be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 can be referred to as an auxiliary storage device. The recording medium can be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure can be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present invention may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure can be represented by an absolute value, can be represented by a relative value from a predetermined value, or can be represented by corresponding other information. For example, a radio resource can be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type) . At least one of a base station and a mobile station also includes a device that does not necessarily move during the communication operation. For example, at least one of a base station and a mobile station may be an Internet of Things (IoT) device such as a sensor.

Also, a base station in the present disclosure may be read meaning as a mobile station (user terminal; the same shall apply hereinafter). For example, each aspect/embodiment of the present disclosure may be applied to a configuration in which communication between a base station and a mobile station is replaced with communication between a plurality of mobile stations (which may be called Device-to-Device (D2D), Vehicle-to-Everything (V2X), or the like). In this case, the mobile station may have the function of a base station. In addition, words such as "uplink" and "downlink" may also be read meaning as words corresponding to inter-terminal communication (for example, "side"). For example, an uplink channel, a downlink channel, or the like may be read meaning as a side channel.

Similarly, the mobile station in the present disclosure may be read as meaning a base station. In this case, the base station may have the function of the mobile station. A radio frame may be composed of one or more frames in the time domain. Each of the one or more frames in the time domain may be referred to as a subframe. A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-encoded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a sub-carrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read meaning as "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10: radio communication system
20: NG-RAN
50: AMF
100: gNB
110: radio communication unit
120: Xn processing unit
130: RRC processing unit
140: control unit
200: UE
210: radio communication unit
220: RRC processing unit
230: handover processing unit
240: control unit
BM: beam
1001: processor
1002: memory
1003: storage
1004: communication device
1005: input device
1006: output device
1007: bus

## Claims

1. A radio base station, comprising:
a transmission unit that transmits to a different radio base station that is a transition destination of a terminal, a message inquiring about a restriction status of the terminal at the different radio base station;
a reception unit that receives terminal support information indicating a support status of a type of the terminal based on the number of receiving antennas of the terminal, from the different radio base station; and
a control unit that controls a transition of the terminal to a cell formed by the different radio base station, based on the terminal support information that is received.

2. The radio base station according to claim 1, wherein
the control unit transmits system information including the terminal support information to the terminal.

3. A radio base station, comprising:
a transmission unit that transmits to a different radio base station that is a transition destination of a terminal, a message inquiring about a resource status of the different radio base station;
a reception unit that receives load condition information indicating a usage status of each terminal type based on the number of receiving antennas of the terminal; and
a control unit that controls a transition of the terminal to a cell formed by the different radio base station, based on the load condition information that is received.

4. A radio communication system including a first radio base station and a second radio base station, wherein
the first radio base station includes:
a transmission unit that transmits to the second radio base station that is a transition destination of a terminal, a message inquiring about a restriction status of the terminal at the second radio base station; and
a control unit that controls a transition of the terminal to a cell formed by the second radio base station, based on terminal support information indicating a support status of a type of the terminal that is based on the number of receiving antennas of the terminal, and
the second radio base station includes a transmission unit that transmits the terminal support information to the first radio base station in response to the message inquiring about the restriction status.

5. A radio communication system including a first radio base station and a second radio base station, wherein
the first radio base station includes:
a transmission unit that transmits to the second radio base station that is a transition destination of a terminal, a message inquiring about a resource status of the second radio base station; and
a control unit that controls a transition of the terminal to a cell formed by the second radio base station, based on load condition information indicating a usage status of each terminal type that is based on the number of receiving antennas of the terminal, and
the second radio base station includes a transmission unit that transmits the load condition information.
